# EUROPEAN PATENT SPECIFICATION

(11) **EP 4 046 908 B1**
(45) Date of publication and mention of the grant of the patent: **11.10.2023**
(21) Application number: 21215011.4
(22) Date of filing: 16.12.2021
(51) Int. Cl.: B64C 27/12, B64D 35/00, H02K 7/00, H02K 7/10, B64C 39/02, B64U 10/10, B64U 50/20

(54) **POWER DEVICE AND OUTPUT MECHANISM OF UNMANNED HELICOPTER**
LEISTUNGSVORRICHTUNG UND AUSGANGSMECHANISMUS FÜR UNBEMANNTEN HUBSCHRAUBER
DISPOSITIF D'ALIMENTATION ET MÉCANISME DE SORTIE D'HÉLICOPTÈRE SANS PILOTE

(30) Priority: 23.02.2021 CN 202110199606
(43) Date of publication of application: 24.08.2022
(73) Proprietor: Beijing Tsingaero Armanment Technology Co., Ltd, Beijing 102101 (CN)
(72) Inventor: Li, Jingyang, Beijing, 102101 (CN); Wang, Xianyu, Beijing, 102101 (CN); Yin, Mingwei, Beijing, 102101 (CN); Hai, Rihan, Beijing, 102101 (CN); Bao, Changchun, Beijing, 102101 (CN); Xu, Zhenhan, Beijing, 102101 (CN)
(74) Representative: Patentanwaltskanzlei Matschnig & Forsthuber OG

(56) References cited:
- CN-U- 206 704 532
- CN-U- 206 704 534
- CN-Y- 2 679 034
- US-A1- 2018 163 795
- US-A1- 2021 031 914

## Description

### FIELD

The present application relates to the technical field of power devices, and in particular to a power device and an output mechanism of a crossed twin-rotor unmanned helicopter.

### BACKGROUND

The structure of a power device used in the field of unmanned helicopters is not compact enough, which results in a large space occupied by the power device.

Among the prior arts, CN206704532U discloses an unmanned helicopter engine and main reducer's connection structure, including main reducer and engine, main reducer includes two input shafts and an output shaft, and two input shaft parallel arrangement just all are connected with the output shaft transmission, and two input shafts can rotate simultaneously and drive the output shaft rotation, the engine is two, the power output shaft parallel arrangement of two engines and respectively with two input shaft, be provided with freewheel clutch and flexible shaft coupling between engine and the input shaft, freewheel clutch includes outer lane and inner circle, freewheel clutch's inner circle and input shaft, freewheel clutch's outer lane is connected with the one end of flexible shaft coupling, the other end of flexible shaft coupling is connected with the power output shaft of engine. US20180163795A1 discloses an overrunning sprag clutches for the uni-directional transmission of torque, the drivetrain subassembly includes a clutch portion and a gear shaft portion connected by an integrated inner race/gear shaft member. The clutch portion includes a sprag clutch configured to transfer torque from an engine to a rotor system while allowing the rotor system to continue to rotate in the event of an engine failure. The inner race of the clutch portion is integrally formed with the gear shaft of the gear shaft portion of the subassembly. The gear shaft is configured to rotate about the longitudinal axis of the sprag clutch for transmitting torque from the sprag clutch to a downstream drivetrain component. CN2679034Y discloses a clutch of a pilotless helicopter connected with the output shaft of an engine in transmission, comprising a transition shaft, two deep groove ball bearings, a synchronous pulley, an outer cover, a clutch base, four friction blocks, two tension springs and a cover plate. The transition shaft is fixedly connected with the output shaft of the engine; the two deep groove ball bearings are respectively sheathed in the inner end of the transition shaft; the synchronous pulley is sheathed out of the two deep groove ball bearings; the outer cover is hollowly sheathed on the transition shaft and is connected on the outer end of the synchronous pulley through bolts; the clutch base is sheathed on the transition shaft and is arranged in the inner chamber of the outer cover; the four friction blocks are evenly distributed on the outer margin of the clutch base; the two tension springs are respectively bound the four friction blocks together in series; the cover plate is covered on the outer end of the clutch base and is fixedly connected with the clutch base through bolts. US2021031914A1 discloses a power apparatus including: a first engine and a second engine symmetrically arranged side by side; a first rotating shaft connected to an output end of the first engine; a second rotating shaft connected to an output end of the second engine; and a speed reducer connected to the first rotating shaft and the second rotating shaft, where a side face of the first engine facing away from the second engine and a side face of the second engine facing away from the first engine are each provided with an exhaust port. Further provided is an unmanned helicopter including the power apparatus. CN206704534U discloses a two unmanned helicopters of turbine shaft power, it includes fuselage, main rotor and for the main rotor provides the driving system of power, driving system is two turbine shaft driving system of sending out, this pair send out turbine shaft driving system include main reducer, two sets of turboshaft engine system and with two sets of turboshaft engine systems controller of electric connection respectively, main reducer's power input be two and respectively with two sets of turboshaft engine headtotails, the power take off end is connected with the main rotor.

### SUMMARY

An object of the present application is to provide a power device and an output mechanism of an unmanned helicopter, and the output mechanism has a compact structure and a small occupied space.

In order to solve the above technical problem, an output mechanism of an unmanned helicopter is provided according to claim 1, which includes a coupling, an overrunning clutch and a limiting sleeve. A blocking portion extending in a radial direction is provided on one end of the limiting sleeve, the overrunning clutch is mounted inside the limiting sleeve, and an axial end of an outer ring of the overrunning clutch is abutted against the blocking portion. At least part of the coupling is inserted into the limiting sleeve in an axial direction, and is abutted against the other axial end of the outer ring of the overrunning clutch. The outer ring of the overrunning clutch, the coupling, and the limiting sleeve rotate synchronously. The output mechanism further includes a power source and an output shaft arranged coaxially, the power source includes a power source shaft, one of the coupling and an inner ring of the overrunning clutch is fixedly mounted on the power source shaft, and the other one of the coupling and the inner ring of the overrunning clutch is fixedly mounted on the output shaft. A slit extending in an axial direction is provided on a circumferential wall of one end portion of the coupling, and a second connecting hole is defined on the circumferential wall of the end portion, the second connecting hole is divided into two hole sections by the slit, and an internal thread is provided on at least one of the hole sections. The output mechanism further comprises a second connecting piece provided with an external thread, the second connecting piece is matched with the second connecting hole, and is configured to drive the coupling to clamp one of the power source shaft and the output shaft.

With this structure, through the arrangement of the limiting sleeve, the coupling and the overrunning clutch are in close contact in the axial direction, and at least part of the coupling is inserted into the limiting sleeve, so that the combined structure of the coupling, the overrunning clutch and the limiting sleeve is more compact, which can reduce the occupied mounting space.

In an embodiment, the coupling includes a first thick-diameter portion and a first thin-diameter portion, a first step surface is formed between the two portions, the coupling is inserted into the limiting sleeve through the first thin-diameter portion, and is abutted against an end portion of the limiting sleeve in an axial direction through the first step surface in an axial direction.

In an embodiment, a first through hole is provided on a circumferential wall of the limiting sleeve, a first connecting hole is provided on a circumferential wall of the coupling, and an internal thread is provided on at least part of the first connecting hole. The output mechanism further includes a first connecting piece with an external thread, and the first connecting piece passes through the first through hole and is connected to the first connecting hole.

In an embodiment, the limiting sleeve includes a second thick-diameter portion and a second thin-diameter portion, and a second step surface is formed between the two portions. The output mechanism further includes a bearing and a collar, a second through hole is defined on a circumferential wall of the collar, the bearing is mounted on the second thin-diameter portion, two axial ends of an inner ring of the bearing are respectively abutted against the second step surface and the collar, and the first connecting piece passes through the second through hole.

In an embodiment, the second thin-diameter portion includes a large-diameter section and a small-diameter section, a third step surface is formed between the large-diameter section and the small-diameter section, the large-diameter section is connected with the second thick-diameter portion, the inner ring of the bearing is mounted on the large-diameter section, and the collar is mounted on the small-diameter section.

In an embodiment, one of the power source shaft and the output shaft which is configured to mount the overrunning clutch is provided with a shaft shoulder, and the shaft shoulder is configured to limit the inner rings of the overrunning clutch.

In an embodiment, the output mechanism further includes a retaining ring. The retaining ring is sheathed on one of the power source shaft and the output shaft which is configured to mount the overrunning clutch, and two ends of the retaining ring are respectively abutted against the shaft shoulder and the inner ring of the overrunning clutch.

In an embodiment, the overrunning clutch is mounted on the output shaft, and a sealing ring is further mounted on the retaining ring.

A power device of an unmanned helicopter is further provided according to claim 9, which includes a gearbox and at least one of the above output mechanism of the unmanned helicopter.

### BRIEF DESCRIPTION OF THE DRAWINGS

FIG. 1 is a schematic structural diagram of an output mechanism of an unmanned helicopter provided according to a specific embodiment of the present application;
FIG. 2 is a sectional view of FIG. 1;
FIG. 3 is a schematic structural diagram of a coupling;
FIG. 4 is a schematic structural diagram of a power device of the unmanned helicopter provided according to the specific embodiment of the present application;
FIG. 5 is a sectional view of FIG. 4.

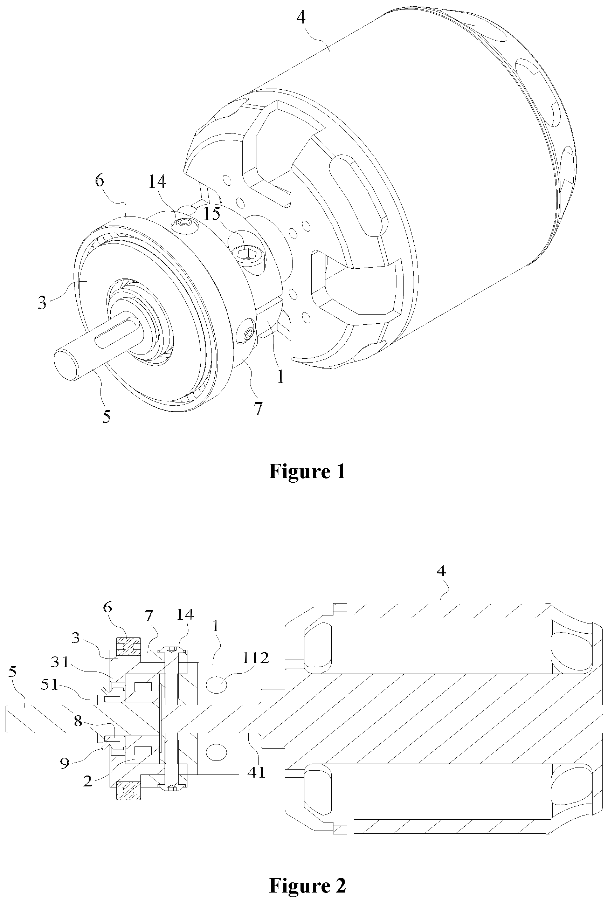

The reference numerals in FIGS. 1 to 5:

| | | | |
|---|---|---|---|
| 1 | coupling, | 11 | first thick-diameter portion, |
| 111 | slit, | 112 | second connecting hole, |
| 12 | first thin-diameter portion, | 121 | first connecting hole, |
| 13 | first step surface, | 14 | first connecting piece, |
| 15 | second connecting piece; | | |
| 2 | overrunning clutch, | | |
| 3 | limiting sleeve, | 31 | blocking portion, |
| 4 | power source, | 41 | power source shaft, |
| 5 | output shaft, | 51 | shaft shoulder, |
| 6 | bearing, | | |
| 7 | collar, | | |
| 8 | retaining ring, | | |
| 9 | sealing ring, | | |
| 100 | abutting cover plate, | 200 | connecting plate, |
| 300 | package cover plate, | 400 | load shaft, |
| 500 | transmission mechanism. | | |

### DETAILED DESCRIPTION OF THE EMBODIMENTS

In order to provide those skilled in the art a better understanding of the solutions of the present application, the present application is described hereinafter in further detail in conjunction with the drawings and embodiments.

The terms "first" and "second" mentioned herein are only used to facilitate the description of two or more structures or components with the same or similar structure and/or function, and do not indicate some special restrictions on the order and/or importance.

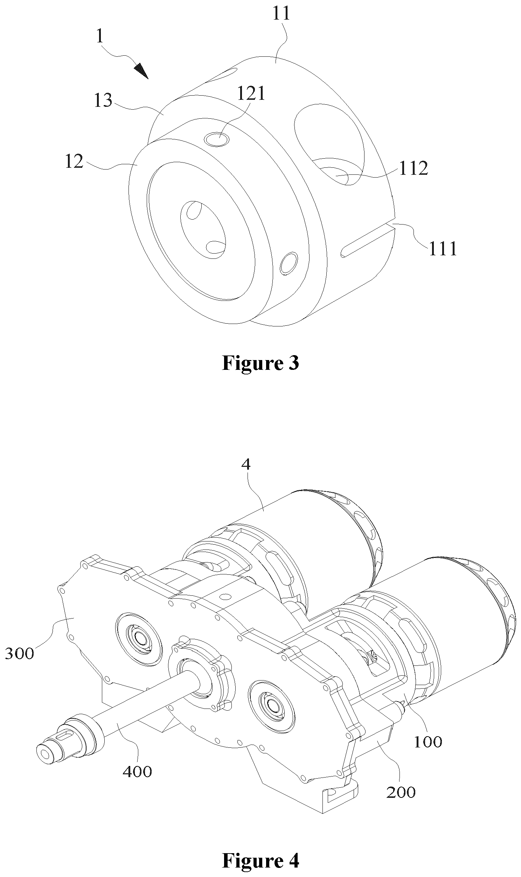

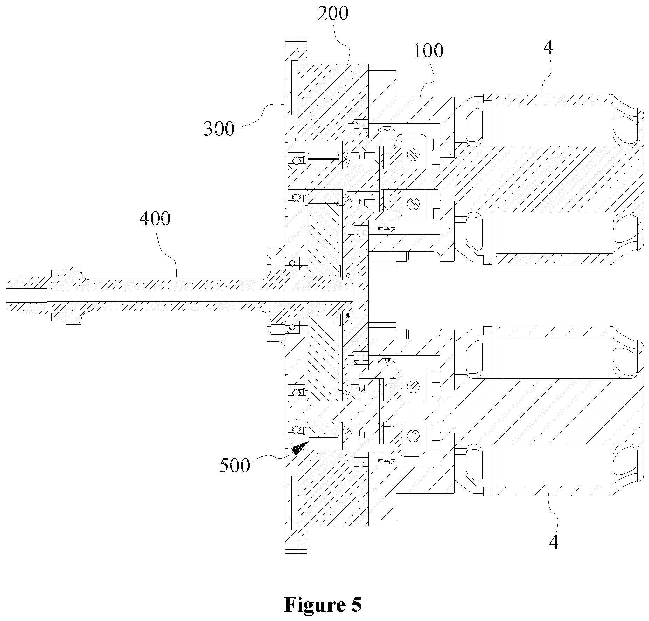

Referring to FIGS. 1 to 5, FIG. 1 is a schematic structural diagram of an output mechanism of an unmanned helicopter provided according to a specific embodiment of the present application; FIG. 2 is a sectional view of FIG. 1; FIG. 3 is a schematic structural diagram of a coupling; FIG. 4 is a schematic structural diagram of a power device of the unmanned helicopter provided according to the specific embodiment of the present application; FIG. 5 is a sectional view of FIG. 4.

As shown in FIGS. 1 and 2, an output mechanism of an unmanned helicopter is provided according to the present application, which includes a coupling 1, an overrunning clutch 2 and a limiting sleeve 3. A blocking portion 31 extending inward in a radial direction is provided on one end of the limiting sleeve 3, the overrunning clutch 2 is mounted inside the limiting sleeve 3, and an axial end of an outer ring of the overrunning clutch 2 is abutted against the blocking portion 31, at least part of the coupling 1 is inserted into the limiting sleeve 3 in an axial direction and is abutted against the other axial end of the outer ring of the overrunning clutch 2, and the outer ring of the overrunning clutch 2, the coupling 1, and the limiting sleeve 3 rotate synchronously. The output mechanism further includes a power source 4 and an output shaft 5 arranged coaxially, the power source 4 includes a power source shaft 41, one of an inner ring of the overrunning clutch 2 and the coupling 1 is fixedly mounted on the power source shaft 41, and the other one is fixedly mounted on the output shaft 5.

With this structure, through the arrangement of the limiting sleeve, the coupling 1 and the overrunning clutch 2 are in close contact in an axial direction, and at least part of the coupling 1 is inserted into the limiting sleeve 3, so that the combined structure of the coupling 1, the overrunning clutch 2 and the limiting sleeve 3 is more compact, which can reduce the occupied mounting space.

In addition, the overrunning clutch 2 is adopted according to the embodiments of the present application to realize the power transmission between the power source shaft 41 and the output shaft 5. In this way, in a case that multiple output mechanisms are provided, if the power source 4 of one output mechanism is damaged, the rotation speed of the power source shaft 41 is reduced, the power source shaft 41 is automatically separated from the corresponding output shaft 5 through the overrunning clutch 2, which can directly isolate the damaged power source 4, and avoid the damaged power source 4 from becoming a load and wasting the power of other output mechanisms.

An axial size of the coupling 1 inserted into the limiting sleeve 3 is not limited here. The coupling 1 may be completely inserted into the limiting sleeve 3 or partially inserted into the limiting sleeve 3, as long as the coupling 1 and the overrunning clutch 2 can be abutted and matched. Specifically, in the embodiment of the present application, it is preferable to adopt a solution that the coupling 1 is partially inserted into the limiting sleeve 3, so that the axial size of the limiting sleeve 3 may be relatively small.

With reference to FIG. 3, in the embodiment of the present application, the coupling 1 includes a first thick-diameter portion 11 and a first thin-diameter portion 12, a first step surface 13 is formed between the two portions, the coupling 1 is inserted into the limiting sleeve 3 through the first thin-diameter portion 12, and is abutted against an end portion of the limiting sleeve 3 in an axial direction through the first step surface 13. With this arrangement, after the limiting sleeve 3 is assembled with the coupling 1, the radial size can be relatively small.

Further, the radial size of an abutting portion of the limiting sleeve 3 with the first step surface 13 may be consistent with the radial size of the first step surface 13. In this way, after the assembly is completed, there is no step at an abutting portion between the limiting sleeve 3 and the first thick-diameter portion 11, and there is no radial redundant design at the abutting portion between the limiting sleeve 3 and the coupling 1, which has positive significance for optimizing the connection structure and reducing the volume of components.

It should be noted that the coupling 1 may also be of equal-diameter design as a whole, or there may be a step at the abutting portion between the limiting sleeve 3 and the first thick-diameter portion 11 after the installation is completed, which does not actually affect the assembly between the coupling 1 and the limiting sleeve 3.

The synchronous rotation of the outer ring of the overrunning clutch 2, the coupling 1 and the limiting sleeve 3 is realized by a fixed connection relationship among the three, and the fixed connection relationship may be realized by an interference fit, or may be realized by some connecting components (a key, a screw, a bolt, etc.) or connecting technology, which is not limited in the embodiments of the present application.

Specifically, in the solution of the drawings, a first through hole (not indicated in the drawing) is defined on a circumferential wall of the limiting sleeve 3, a first connecting hole 121 is defined on a circumferential wall of the coupling 1, and an internal thread is provided on at least part of the first connecting hole 121, the output mechanism further includes a first connecting piece 14 with an external thread, and the first connecting piece 14 passes through the first through hole and is connected to the first connecting hole 121. With this solution, through the matching of the first connecting piece 14 with the first through hole and the first connecting hole 121, relative positions of the limiting sleeve 3 and the coupling 1 in an axial direction and a circumferential direction are effectively limited.

An internal thread may be provided on the first through hole or not, which may be determined according to the actual situation. The number of the first connecting piece 14 may be one or multiple. In a case that the number of the first connecting piece 14 is multiple, the first through hole and the first connecting hole 121 may also be multiple, so as to correspond to the number of the first connecting piece 14.

Further, the limiting sleeve 3 includes a second thick-diameter portion and a second thin-diameter portion, and a second step surface is formed between the two portions. The output mechanism further includes a bearing 6 and a collar 7, a second through hole is defined on a circumferential wall of the collar 7, the bearing 6 is mounted on the second thin-diameter portion, two axial ends of an inner ring of the bearing 6 are respectively abutted against the second step surface and the collar 7, and the first connecting piece 14 passes through the second through hole, so as to limit axial and circumferential relative positions of the collar 7 relative to the limiting sleeve 3.

The mounting bearing is used for fixing the output mechanism and an outer housing. The matching between the collar 7 and the second step surface is configured to limit the axial position of the bearing 6. By providing the second connecting hole on the collar 7, the collar 7 is fixed by the above first connecting piece 14, which reduces the number of connecting components, and simplifies the structure. Similar to the related definition of the first connecting hole, an internal thread may also be provided on the second connecting hole or not, and the number of the second connecting hole correspond to the number of the first connecting piece 14.

The second thin-diameter portion may further include a large-diameter section and a small-diameter section, a third step surface is formed between the two sections, the large-diameter section is connected with the second thick-diameter portion, the inner ring of the bearing 6 is mounted on the large-diameter section, and the collar 7 is mounted on the small-diameter section. With this arrangement, the radial size of the limiting sleeve 3 for mounting the limiting sleeve 3 may be relatively small, which is beneficial to reducing the structure size of the limiting sleeve 3, and saving the material for preparing the limiting sleeve 3.

A slit 111 extending in an axial direction is provided on a circumferential wall of one end portion of the coupling 1, and a second connecting hole 112 is defined on the circumferential wall of the end portion, the second connecting hole 112 is divided into two hole sections by the slit 111, and an internal thread is provided on at least one of the hole sections. The output mechanism further includes a second connecting piece 15 provided with an external thread, the second connecting piece 15 is matched with the second connecting hole 112, and is configured to drive the coupling 1 to clamp one of the power source shaft 41 and the output shaft 5.

Specifically, in the embodiment of the present application, the coupling 1 is mounted on the power source shaft 41. As shown in FIG. 3, the slit 111 is located at the thick-diameter portion 11 of the coupling 1, so that the portion of the thick-diameter portion 11 provided with the slit 111 is a non-closed annular shape in the circumferential direction. When the second connecting piece 15 is used for connection, two opposite slit walls of the slit 111 may approach each other, so as to clamp the power source shaft 41 tightly. The number of the slit 111 may be one or multiple, which are both solutions used in specific practice.

Only one of the two hole sections of the second connecting hole 112 may be provided with an internal thread. At this time, the second connecting piece 15 first passes through the hole section without an internal thread, and then is connected with the hole section provided with an internal thread. Alternatively, the two hole sections of the second connecting hole 112 may both be provided with an internal thread. In this case, a mounting direction of the second connecting piece 15 is not limited.

Both the first connecting piece 14 and the second connecting piece 15 may be bolt-like components, which include a head portion and a rod portion. The head portion may be provided with an internal hexagonal groove, a cross groove or a slotted groove, so as to match with an operating tool such as a screwdriver. Alternatively, the head portion may be arranged as an external hexagonal structure for matching with a wrench, and an external thread may be provided on the rod portion, which is configured to match with the hole portion with an internal thread for connection.

One of the power source shaft 41 and the output shaft 5 which is configured to mount the overrunning clutch 2 is provided with a shaft shoulder 51, and the shaft shoulder 51 is configured to limit the inner ring of the overrunning clutch 2, so as to ensure an axial position of the inner ring of the overrunning clutch 2. Specifically, in the drawings, the overrunning clutch 2 is mounted on the output shaft 5. Therefore, the above shaft shoulder 51 may be arranged on the output shaft 5.

Further, the output mechanism further includes a retaining ring 8. The retaining ring 8 is sheathed on one of the power source shaft 41 and the output shaft 5 which is configured to mount the overrunning clutch 2, and two ends of the retaining ring 8 are respectively abutted against the shaft shoulder 51 and the inner ring of the overrunning clutch 2. In this way, the arranging position of the shaft shoulder 51 is better adapted, so that in a case that the shaft shoulder 51 cannot directly be abutted against the inner ring of the overrunning clutch 2, it can be indirectly abutted against the inner ring of the overrunning clutch 2 through the retaining ring 8.

As described above, in the embodiment of the present application, the overrunning clutch 2 may be mounted on the output shaft 5, and the output shaft 5 is actually connected with other components. In addition, a sealing ring 9 may be provided on the retaining ring 8 for sealing the end surface.

As shown in FIGS. 4 and 5, a power device of an unmanned helicopter is provided according to the present application, which includes a gearbox and at least one output mechanism of the unmanned helicopter according to the above embodiments.

Since the output mechanism of the unmanned helicopter has the above technical effects, the power device of the unmanned helicopter also has similar technical effects, which will not be repeated here.

The output mechanism used in the power device may be one or multiple. In a case that there are multiple output mechanisms, the power output by the output shafts 5 of the output mechanisms are collected together. In this case, it is necessary to configure a transmission mechanism 500 for each output shaft 5, so as to collect the power of the output shafts 5, and the specific structure of the transmission mechanism 500 is not limited here.

In the embodiment shown in FIG. 5, there may be two output mechanisms, and the two output mechanisms may be covered with an abutting cover plate 100, and each of the output mechanisms is inserted into a connecting plate 200. The connecting plate 200 and the abutting cover plate 100 are mounted on the bearing 6, and are abutted against the outer ring of the bearing 6. The package cover plate 300 may be mounted on the connecting plate 200 and be enclosed with the connecting plate 200 to form a mounting chamber of the transmission mechanism 500, and a load shaft 400 may be inserted into the mounting chamber and is connected with the transmission mechanism 500.

As described above, with the arrangement of the overrunning clutch 2, if one of the power sources 4 is damaged, it does not affect the operation of the other power source 4.

The sealing ring 9 can achieve a seal between the retaining ring 8 and the connecting plate 200.

The above are only the preferred embodiments of the present application. It should be noted that, for the person skilled in the art, a few improvements and modifications may be made to the present embodiments without departing from the scope of the invention, which is defined by the appended claims.

## Claims

1. An output mechanism of an unmanned helicopter, comprising a coupling (1), an overrunning clutch (2) and a limiting sleeve (3), wherein a blocking portion (31) extending in a radial direction is provided on one end of the limiting sleeve (3), the overrunning clutch (2) is mounted inside the limiting sleeve (3), and an axial end of an outer ring of the overrunning clutch (2) is abutted against the blocking portion (31), at least part of the coupling (1) is inserted into the limiting sleeve (3) in an axial direction and is abutted against the other axial end of the outer ring of the overrunning clutch (2), and the outer ring of the overrunning clutch (2), the coupling (1), and the limiting sleeve (3) rotate synchronously;
the output mechanism further comprises a power source (4) and an output shaft (5) arranged coaxially, the power source (4) comprises a power source shaft (41), one of the coupling (1) and an inner ring of the overrunning clutch (2) is fixedly mounted on the power source shaft (41), and the other one of the coupling (1) and the inner ring of the overrunning clutch (2) is fixedly mounted on the output shaft (5),
**characterized in that**, a slit (111) extending in an axial direction is provided on a circumferential wall of one end portion of the coupling (1), and a second connecting hole (112) is defined on the circumferential wall of the end portion, the second connecting hole (112) is divided into two hole sections by the slit (111), and an internal thread is provided on at least one of the hole sections;
wherein the output mechanism further comprises a second connecting piece (15) provided with an external thread, the second connecting piece (15) is matched with the second connecting hole (112), and is configured to drive the coupling (1) to clamp one of the power source shaft (41) and the output shaft (5).

2. The output mechanism of the unmanned helicopter according to claim 1, wherein the coupling (1) comprises a first thick-diameter portion (11) and a first thin-diameter portion (12), a first step surface (13) is formed between the two portions, the coupling (1) is inserted into the limiting sleeve (3) through the first thin-diameter portion (12), and is abutted against an end portion of the limiting sleeve (3) through the first step surface (13) in an axial direction.

3. The output mechanism of the unmanned helicopter according to claim 1, wherein a first through hole is provided on a circumferential wall of the limiting sleeve (3), a first connecting hole (121) is provided on a circumferential wall of the coupling (1), and an internal thread is provided on at least part of the first connecting hole (121);
wherein the output mechanism further comprises a first connecting piece (14) with an external thread, and the first connecting piece (14) passes through the first through hole and is connected to the first connecting hole (121).

4. The output mechanism of the unmanned helicopter according to claim 3, wherein the limiting sleeve (3) comprises a second thick-diameter portion and a second thin-diameter portion, and a second step surface is formed between the two portions;
wherein the output mechanism further comprises a bearing (6) and a collar (7), a second through hole is defined on a circumferential wall of the collar (7), the bearing (6) is mounted on the second thin-diameter portion, two axial ends of an inner ring of the bearing (6) are respectively abutted against the second step surface and the collar (7), and the first connecting piece (14) passes through the second through hole.

5. The output mechanism of the unmanned helicopter according to claim 4, wherein the second thin-diameter portion comprises a large-diameter section and a small-diameter section, a third step surface is formed between the large-diameter section and the small-diameter section, the large-diameter section is connected with the second thick-diameter portion, the inner ring of the bearing (6) is mounted on the large-diameter section, and the collar (7) is mounted on the small-diameter section.

6. The output mechanism of the unmanned helicopter according to any one of claims 1 to 5, wherein one of the power source shaft (41) and the output shaft (5) which is configured to mount the overrunning clutch (2) is provided with a shaft shoulder (51), and the shaft shoulder (51) is configured to limit the inner ring of the overrunning clutch (2).

7. The output mechanism of the unmanned helicopter according to claim 6, further comprising a retaining ring (8), wherein the retaining ring (8) is sheathed on one of the power source shaft (41) and the output shaft (5) which is configured to mount the overrunning clutch (2), and two ends of the retaining ring (8) are respectively abutted against the shaft shoulder (51) and the inner ring of the overrunning clutch (2).

8. The output mechanism of the unmanned helicopter according to claim 7, wherein the overrunning clutch (2) is mounted on the output shaft (5), and a sealing ring (9) is further mounted on the retaining ring (8).

9. A power device of an unmanned helicopter, comprising a gearbox, further comprising the output mechanism of the unmanned helicopter according to any one of claims 1 to 8.

## Patentansprüche

1. Ausgabemechanismus eines unbemannten Hubschraubers, mit einer Kupplung (1), einer Überholkupplung (2) und einer Begrenzungshülse (3), wobei an einem Ende der Begrenzungshülse (3) ein sich in radialer Richtung erstreckender Blockierabschnitt (31) vorgesehen ist, die Überholkupplung (2) innerhalb der Begrenzungshülse (3) gelagert ist, und ein axiales Ende eines Außenrings der Überholungskupplung (2) an dem Blockierabschnitt (31) anliegt, zumindest ein Teil der Kupplung (1) in die Begrenzungshülse (3) in einer axialen Richtung eingeführt ist und an dem anderen axialen Ende des Außenrings der Überholungskupplung (2) anliegt, und der Außenring der Überholungskupplung (2), die Kupplung (1) und die Begrenzungshülse (3) sich synchron drehen;
der Ausgabemechanismus ferner eine Kraftquelle (4) und eine Abtriebswelle (5) umfasst, die koaxial angeordnet sind, wobei die Kraftquelle (4) eine Kraftquellenwelle (41) umfasst, eine der Kupplungen (1) und ein Innenring der Freilaufkupplung (2) fest auf der Kraftquellenwelle (41) montiert ist und die andere der Kupplungen (1) und der Innenring der Freilaufkupplung (2) fest auf der Abtriebswelle (5) montiert ist
**dadurch gekennzeichnet, dass** ein sich in einer axialen Richtung erstreckender Schlitz (111) an einer Umfangswand eines Endabschnitts der Kupplung (1) vorgesehen ist und ein zweites Verbindungsloch (112) an der Umfangswand des Endabschnitts definiert ist, wobei das zweite Verbindungsloch (112) durch den Schlitz (111) in zwei Lochabschnitte unterteilt ist und ein Innengewinde an mindestens einem der Lochabschnitte vorgesehen ist;
wobei der Ausgabemechanismus ferner ein zweites Verbindungsstück (15) umfasst, das mit einem Außengewinde versehen ist, wobei das zweite Verbindungsstück (15) an das zweite Verbindungsloch (112) angepasst ist und so konfiguriert ist, dass es die Kupplung (1) antreibt, um entweder die Kraftquellenwelle (41) oder die Ausgangswelle (5) zu klemmen.

2. Ausgabemechanismus des unbemannten Hubschraubers nach Anspruch 1, wobei die Kupplung (1) einen ersten Abschnitt (11) mit dickem Durchmesser und einen ersten Abschnitt (12) mit dünnem Durchmesser umfasst, eine erste Stufenfläche (13) zwischen den beiden Abschnitten ausgebildet ist, die Kupplung (1) durch den ersten Abschnitt (12) mit dünnem Durchmesser in die Begrenzungshülse (3) eingeführt wird und durch die erste Stufenfläche (13) in einer axialen Richtung an einem Endabschnitt der Begrenzungshülse (3) anliegt.

3. Ausgabemechanismus des unbemannten Hubschraubers nach Anspruch 1, wobei ein erstes Durchgangsloch an einer Umfangswand der Begrenzungshülse (3) vorgesehen ist, ein erstes Verbindungsloch (121) an einer Umfangswand der Kupplung (1) vorgesehen ist und ein Innengewinde an zumindest einem Teil des ersten Verbindungslochs (121) vorgesehen ist;
wobei der Ausgabemechanismus ferner ein erstes Verbindungsstück (14) mit einem Außengewinde umfasst, und das erste Verbindungsstück (14) durch das erste Durchgangsloch hindurchgeht und mit dem ersten Verbindungsloch (121) verbunden ist.

4. Ausgabemechanismus des unbemannten Hubschraubers nach Anspruch 3, wobei die Begrenzungshülse (3) einen zweiten Abschnitt mit dickem Durchmesser und einen zweiten Abschnitt mit dünnem Durchmesser umfasst und eine zweite Stufenfläche zwischen den beiden Abschnitten ausgebildet ist;
wobei der Ausgabemechanismus ferner ein Lager (6) und einen Kragen (7) umfasst, ein zweites Durchgangsloch an einer Umfangswand des Kragens (7) definiert ist, das Lager (6) an dem zweiten Abschnitt mit dünnem Durchmesser angebracht ist, zwei axiale Enden eines Innenrings des Lagers (6) jeweils an der zweiten Stufenfläche und dem Kragen (7) anliegen und das erste Verbindungsstück (14) durch das zweite Durchgangsloch verläuft.

5. Ausgabemechanismus des unbemannten Hubschraubers nach Anspruch 4, wobei der zweite Abschnitt mit dünnem Durchmesser einen Abschnitt mit großem Durchmesser und einen Abschnitt mit kleinem Durchmesser umfasst, eine dritte Stufenfläche zwischen dem Abschnitt mit großem Durchmesser und dem Abschnitt mit kleinem Durchmesser ausgebildet ist, der Abschnitt mit großem Durchmesser mit dem zweiten Abschnitt mit dickem Durchmesser verbunden ist, der Innenring des Lagers (6) an dem Abschnitt mit großem Durchmesser angebracht ist und der Bund (7) an dem Abschnitt mit kleinem Durchmesser angebracht ist.

6. Ausgabemechanismus des unbemannten Hubschraubers nach einem der Ansprüche 1 bis 5, wobei entweder die Antriebswelle (41) oder die Ausgabewelle (5), die zur Montage der Freilaufkupplung (2) konfiguriert ist, mit einer Wellenschulter (51) versehen ist und die Wellenschulter (51) konfiguriert ist, um den Innenring der Freilaufkupplung (2) zu begrenzen.

7. Ausgabemechanismus des unbemannten Hubschraubers nach Anspruch 6 umfasst ferner einen Haltering (8), wobei der Haltering (8) auf der Antriebswelle (41) oder der Ausgangswelle (5), die zur Montage der Freilaufkupplung (2) konfiguriert ist, ummantelt ist, und zwei Enden des Halterings (8) jeweils an der Wellenschulter (51) und dem Innenring der Freilaufkupplung (2) anliegen.

8. Ausgabemechanismus des unbemannten Hubschraubers nach Anspruch 7, wobei die Überholkupplung (2) auf der Ausgangswelle (5) montiert ist und ein Dichtungsring (9) ferner auf dem Haltering (8) montiert ist.

9. Antriebsvorrichtung eines unbemannten Hubschraubers, umfassend ein Getriebe, ferner umfassend den Ausgabemechanismus des unbemannten Hubschraubers nach einem der Ansprüche 1 bis 8.

## Revendications

1. Mécanisme de sortie d'un hélicoptère sans pilote, comprenant un accouplement (1), un embrayage à roue libre (2) et un manchon de limitation (3), dans lequel une partie de blocage (31) s'étendant dans une direction radiale est prévue sur une extrémité du manchon de limitation (3), l'embrayage à roue libre (2) est monté à l'intérieur du manchon de limitation (3), et une extrémité axiale d'une bague extérieure de l'embrayage à roue libre (2) est en butée contre la partie de blocage (31), et une extrémité axiale d'une bague extérieure de l'embrayage à roue libre (2) est en butée contre la portion de blocage (31), au moins une partie de l'accouplement (1) est insérée dans le manchon de limitation (3) dans une direction axiale et est en butée contre l'autre extrémité axiale de la bague extérieure de l'embrayage à roue libre (2), et la bague extérieure de l'embrayage à roue libre (2), l'accouplement (1) et le manchon de limitation (3) tournent de manière synchrone;
le mécanisme de sortie comprend en outre une source d'énergie (4) et un arbre de sortie (5) disposés coaxialement, la source d'énergie (4) comprend un arbre de source d'énergie (41), l'un de l'accouplement (1) et une bague intérieure de l'embrayage à roue libre (2) sont montés fixement sur l'arbre de source d'énergie (41), et l'autre de l'accouplement (1) et la bague intérieure de l'embrayage à roue libre (2) sont montés fixement sur l'arbre de sortie (5),
**caractérisé en ce qu'**une fente (111) s'étendant dans une direction axiale est prévue sur une paroi circonférentielle d'une partie d'extrémité du coupleur (1), et un second trou de connexion (112) est défini sur la paroi circonférentielle de la partie d'extrémité, le second trou de connexion (112) est divisé en deux sections de trou par la fente (111), et un filetage interne est prévu sur au moins l'une des sections de trou ;
le mécanisme de sortie comprend en outre une deuxième pièce de connexion (15) dotée d'un filetage externe, la deuxième pièce de connexion (15) est adaptée au deuxième trou de connexion (112) et est configurée pour entraîner l'accouplement (1) afin de serrer l'un de l'arbre de la source d'énergie (41) et de l'arbre de sortie (5).

2. Mécanisme de sortie de l'hélicoptère sans pilote selon la revendication 1, dans lequel l'accouplement (1) comprend une première partie de diamètre épais (11) et une première partie de diamètre mince (12), une première surface de marche (13) est formée entre les deux parties, l'accouplement (1) est inséré dans le manchon de limitation (3) à travers la première partie de diamètre mince (12), et est en butée contre une partie d'extrémité du manchon de limitation (3) à travers la première surface de marche (13) dans une direction axiale.

3. Mécanisme de sortie de l'hélicoptère sans pilote selon la revendication 1, dans lequel un premier trou traversant est prévu sur une paroi circonférentielle du manchon de limitation (3), un premier trou de connexion (121) est prévu sur une paroi circonférentielle de l'accouplement (1), et un filetage interne est prévu sur au moins une partie du premier trou de connexion (121) ;
le mécanisme de sortie comprend en outre une première pièce de connexion (14) dotée d'un filetage externe, et la première pièce de connexion (14) traverse le premier trou de passage et est reliée au premier trou de connexion (121).

4. Mécanisme de sortie de l'hélicoptère sans pilote selon la revendication 3, dans lequel le manchon de limitation (3) comprend une deuxième partie de diamètre épais et une deuxième partie de diamètre mince, et une deuxième surface de marche est formée entre les deux parties ;
dans lequel le mécanisme de sortie comprend en outre un roulement (6) et un collier (7), un deuxième trou traversant est défini sur une paroi circonférentielle du collier (7), le roulement (6) est monté sur la deuxième portion de diamètre fin, deux extrémités axiales d'une bague intérieure du roulement (6) sont respectivement en butée contre la deuxième surface de marche et le collier (7), et la première pièce de raccordement (14) passe à travers le deuxième trou traversant.

5. Mécanisme de sortie de l'hélicoptère sans pilote selon la revendication 4, dans lequel la deuxième partie de diamètre mince comprend une section de grand diamètre et une section de petit diamètre, une troisième surface de marche est formée entre la section de grand diamètre et la section de petit diamètre, la section de grand diamètre est reliée à la deuxième partie de diamètre épais, la bague intérieure du roulement (6) est montée sur la section de grand diamètre, et le collier (7) est monté sur la section de petit diamètre.

6. Mécanisme de sortie de l'hélicoptère sans pilote selon l'une des revendications 1 à 5, dans lequel l'un de l'arbre de la source d'énergie (41) et l'arbre de sortie (5) qui est configuré pour monter l'embrayage à roue libre (2) est pourvu d'un épaulement d'arbre (51), et l'épaulement d'arbre (51) est configuré pour limiter la bague intérieure de l'embrayage à roue libre (2).

7. Mécanisme de sortie de l'hélicoptère sans pilote selon la revendication 6, comprend en outre un anneau de retenue (8), dans lequel l'anneau de retenue (8) est gainé sur l'un de l'arbre de la source d'énergie (41) et l'arbre de sortie (5) qui est configuré pour monter l'embrayage à roue libre (2), et deux extrémités de l'anneau de retenue (8) sont respectivement en butée contre l'épaulement de l'arbre (51) et l'anneau intérieur de l'embrayage à roue libre (2).

8. Mécanisme de sortie de l'hélicoptère sans pilote selon la revendication 7, dans lequel l'embrayage à roue libre (2) est monté sur l'arbre de sortie (5), et une bague d'étanchéité (9) est également montée sur la bague de retenue (8).

9. Dispositif de puissance d'un hélicoptère sans pilote, comprenant une boîte de vitesses, comprenant en outre le mécanisme de sortie de l'hélicoptère sans pilote selon l'une des revendications 1 à 8.
